# EUROPÄISCHE PATENTSCHRIFT

(11) **EP 2 536 298 B1**
(45) Veröffentlichungstag und Bekanntmachung des Hinweises auf die Patenterteilung: **13.08.2014**
(21) Anmeldenummer: 10781831.2
(22) Anmeldetag: 16.11.2010
(51) Int. Cl.: A23L 1/236, A23L 1/30, A23L 1/09, A23L 2/60, A23L 2/52

(54) **SÜSSSTOFFZUSAMMENSETZUNGEN**
NOVEL SWEETENER COMPOSITIONS
NOUVELLES COMPOSITIONS D'ÉDULCORANTS

(30) Priorität: 28.06.2010 DE 102010025323; 19.02.2010 DE 102010008707
(43) Veröffentlichungstag der Anmeldung: 26.12.2012
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: Von Rohr Patentanwälte Partnerschaft mbB
(86) Internationale Anmeldenummer: PCT/EP2010/006953
(87) Internationale Veröffentlichungsnummer: WO 2011/101002

(56) Entgegenhaltungen:
- EP-A1- 1 652 436
- EP-A1- 1 817 964
- EP-A1- 2 177 111
- WO-A1-97/45025
- WO-A1-98/42206
- WO-A1-2006/015880
- WO-A1-2006/137079
- WO-A1-2011/017443
- WO-A2-2007/061810
- DE-A1-102005 024 183
- JP-A- 2000 037 169
- US-A1- 2002 192 355
- US-A1- 2008 069 935
- US-A1- 2008 311 265
- US-A1- 2009 110 797
- US-A1- 2009 324 793
- DATABASE WPI Week 200701 Thomson Scientific, London, GB; AN 2007-004693 XP002626104, & JP 2006 314240 A (MEIJI SEIKA KAISHA LTD) 24. November 2006 (2006-11-24)
- DATABASE WPI Week 201006 Thomson Scientific, London, GB; AN 2010-A28123 XP002626105, & CN 101 606 680 A (GUANGDONG FOOD IND RES INST) 23. Dezember 2009 (2009-12-23)
- DATABASE WPI Week 200843 Thomson Scientific, London, GB; AN 2008-G72826 XP002626106, & CN 101 124 960 A (UNIV SHANGHAI NORMAL) 20. Februar 2008 (2008-02-20)
- DATABASE WPI Week 200837 Thomson Scientific, London, GB; AN 2008-F56580 XP002626107, & CN 101 124 980 A (UNIV SHANGHAI NORMAL) 20. Februar 2008 (2008-02-20)
- DATABASE WPI Week 200428 Thomson Scientific, London, GB; AN 2004-299949 XP002626108, & JP 2004 113146 A (AJINOMOTO KK) 15. April 2004 (2004-04-15)
- 'Dextrin', [Online] Wikipedia Gefunden im Internet: <URL:http://en.wikipedia.org/wiki/Dextrin> [gefunden am 2013-09-13]
- 'Fibersol-2 Nutritional Information', [Online] Gefunden im Internet: <URL:http://www.fibersol.com/products/fiber sol-2/nutritional-information/> [gefunden am 2013-09-13]

## Beschreibung

Die vorliegende Erfindung betrifft das Gebiet der Lebensmitteltechnologie, insbesondere Süßstoffzusammensetzungen bzw. Zusammensetzungen mit reduziertem physiologischem Brennwert (Energiegehalt) zum Süßen von Lebensmitteln.

Insbesondere betrifft die vorliegende Erfindung eine Süßstoffzusammensetzung, insbesondere mit reduziertem physiologischem Brennwert (Energiegehalt), welche vorzugsweise zum Süßen von Lebensmitteln eingesetzt werden kann.

Zudem betrifft die vorliegende Erfindung die Verwendung der erfindungsgemäßen Süßstoffzusammensetzung nach der Erfindung.

Die Ernährung spielt eine bedeutende Rolle hinsichtlich der Gesunderhaltung und des Wohlbefindens des menschlichen Körpers. Insbesondere in den industrialisierten Ländern sind die Ernährungsgewohnheiten im Hinblick auf eine ausgewogene und gesunde Ernährung oftmals nicht optimal. Insbesondere werden oftmals Lebensmittel verzehrt, welche einen zu hohen Fettgehalt sowie einen sehr hohen Zuckergehalt aufweisen. Auch werden übermäßig ballaststoffarme Getreideprodukte, insbesondere auf Weizenmehlbasis, konsumiert. Diese insbesondere für die Industrienationen typische Ernährungsweise führt zu einer zunehmenden Verdrängung von Lebensmitteln mit einem hohen Ballaststoffgehalt, so daß die positive Wirkung einer ballaststoffreichen Kost bei den heutigen Ernährungsgewohnheiten fehlt.

Als Folge dieser nicht ausgewogenen Ernährung treten oftmals bestimmte Krankheitsbilder auf, wie Karies, Verstopfung, Divertikulose, Diabetes, Herz-Kreislauf-Erkrankungen sowie Tumorerkrankungen, wie Dickdarmkrebs. Im Hinblick auf die vorgenannten Erkrankungen kann oftmals auch ein Zusammenhang mit einer zu geringen Aufnahme von Ballaststoffen vorliegen, was die vorgenannten Erkrankungen hervorrufen bzw. diese mitunter verstärken kann. Eine Änderung der Ernährungsgewohnheiten hin zu einer vollwertigen und ballaststoffreichen Kost führt oftmals zu einer Verbesserung der in Rede stehenden Krankheiten bzw. läßt diese gar nicht erst auftreten. Vor diesem Hintergrund kommt der ausreichenden Aufnahme von Ballaststoffen somit eine bedeutsame Rolle hinsichtlich der Gesunderhaltung des menschlichen Körpers zu.

Hinsichtlich der positiven Eigenschaften von Ballaststoffen wird zudem angenommen, daß durch eine ballaststoffreiche Kost das Risiko der Erkrankung an der koronaren Herzkrankheit verringert werden kann, insbesondere in dem Zusammenhang, daß Ballaststoffe zu einer verstärkten Ausscheidung von Gallensäuren führen und zudem einen cholesterinsenkenden Effekt aufweisen. Ebenfalls gilt als gesichert, daß eine ballaststoffreiche Kost zur Behandlung der Divertikulitis eingesetzt werden kann.

Im allgemeinen stellen Ballaststoffe weitgehend unverdauliche Nahrungsbestandteile dar, welche von den menschlichen Verdauungssekreten nicht in für den Körper verwertbare Bruchstücke gespalten werden können und somit vom Verdauungssystem nicht als Nährstoffe verwertbar sind. Im allgemeinen können Ballaststoffe auch aufgrund ihrer physikalischen Eigenschaften unterteilt werden: So gibt es zum einen wasserunlösliche Ballaststoffe, welche im allgemeinen in der Lage sind, Wasser an sich zu binden, so daß auf diese Weise beispielsweise das Stuhlvolumen erhöht wird, einhergehend mit einer Anregung der Darmbewegung, was beispielsweise einer Verstopfung entgegenwirken kann. Weiterhin gibt es so genannte wasserlösliche Ballaststoffe, welche im allgemeinen in Wasser löslich sind. Derartige wasserlösliche Ballaststoffe können zudem insbesondere im Dickdarm zumindest zum Teil durch die dort vorhandenen Mikroorganismen fermentiert und unter anderem in kurzkettige Fettsäuren umgewandelt werden, welche von der Dickdarmschleimhaut weitgehend resorbiert werden und zur Ernährung von Schleimhautzellen dienen können, was gleichermaßen einen positiven Effekt auf die Gesundheit aufweisen kann.

Auf Basis der positiven Eigenschaften von Ballaststoffen mit der damit einhergehenden Verhinderung von Erkrankungen empfiehlt die deutsche Gesellschaft für Ernährung täglich mindestens 30 g Ballaststoffe aufzunehmen. Aufgrund der modernen Ernährungsweise, welche insbesondere auch auf den Verzehr industriell vorgefertigter Lebensmittel abzielt, ist dies jedoch nicht immer gewährleistet.

Darüber hinaus zielt die Ernährungsweise in den Industrienationen auch oftmals auf den Verzehr von mitunter stark gesüßten Nahrungsmitteln ab. Vor dem Hintergrund eines stetig steigenden Bedürfnisses nach gesunder und insbesondere kalorienbewußter Ernährung werden im Stand der Technik kalorienreduzierte Produkte als alternative Süßungsmittel zu klassischem Kristallzucker (d. h. Saccharose) verwendet. Diese können beispielsweise in Form von sogenannten Streu- oder Tafelsüßen sowie in Form von Kompaktaten bzw. Tabletten oder aber in Form von wäßrigen Zusammensetzungen bzw. Flüssigsüßen eingesetzt werden.

Derartige Süßungsmittel des Standes der Technik, welche eine große Verbreitung finden, lassen jedoch den Aspekt der Bereitstellung weiterführender Inhaltsstoffe mit positivem Effekt auf die Gesundheit völlig aus, insbesondere im Hinblick auf die zuvor angeführten Ballaststoffe. Zudem ist es auf Basis der im Stand der Technik bekannten Süßungsmittel nicht möglich, die organoleptischen Eigenschaften der zu süßenden Nahrungsmittel in gezielter Weise einzustellen bzw. maßzuschneidern, beispielsweise was die Viskosität bzw. Cremigkeit oder dergleichen von insbesondere flüssigen Nahrungsmitteln, beispielsweise auf Getränkebasis, anbelangt.

Ein weiterer Nachteil der im Stand der Technik bekannten Süßungsmittel ist zudem oftmals darin zu sehen, daß diese aufgrund der speziellen Zusammensetzung und der mitunter ausschließlichen Verwendung von Süßstoffen als solchen hinsichtlich der Süßkraft schwer zu dosieren sind und darüber hinaus oftmals einen unnatürlichen bzw. künstlichen Süßgeschmack aufweisen. Demnach sind die sensorischen Eigenschaften der im Stand der Technik bekannten Süßungsmittel mitunter nicht optimal.

Die JP 2000-037169 A betrifft eine Süßstoffzusammensetzung in granulärer Form, welche einen Süßstoff aus der Gruppe von Aspartam, Steviosiden, Glycyrrhizin, Acesulfamkalium, Thaumatin, Succhralose, Saccharin, Neotam und darüber hinaus Dextrin enthält.

Die US 2002/0192355 A1 betrifft Süßstoffzusammensetzungen, welche 3 bis 99 Gew.-% verzweigte Maltodextrine und darüber hinaus einen Süßstoff aus der Gruppe von Aspartam, Acesulfam-K, Saccharin, Cyclamat, Steviosid und Sucralose enthalten.

Die JP 2006-314240 A betrifft eine Süßstoffzusammensetzung auf Basis von Oligosacchariden, unverdaulichen diätetischen Fasern sowie Süßstoffen, welche-neben einem geringen Kaloriengehalt - einen Effekt auf die Senkung des Glucosespiegels im Blut haben soll. Als Ballaststoff soll dabei Dextrin eingesetzt werden.

Die EP 1 817 964 A1 sowie die zur gleichen Patentfamilie gehörende WO 2006/015880 A1 betreffen eine funktionelle Lebensmittelzusammensetzung, welche eine Süßkraft, bezogen auf das Gewicht bzw. das Volumen, entsprechend der von Zucker besitzt. Die Zusammensetzung basiert auf einer Füllstoff-Komponente, ausgewählt aus der Gruppe von Polydextrose, Inulin, Oligofructose und verdauungsresistentem Maltodextrin, sowie mindestens einem Süßstoff.

Die CN 101 606 680 A betrifft eine Süßstoffzusammensetzung, welche 30 bis 60 Gew.-% Oligoisomaltulose, 25 bis 50 Gew.-% wasserlösliche Ballaststoffe, 10 bis 30 Gew.-% Maltodextrin, 0,1 bis 2 Gew.-% Trichlorsaccharose sowie 0,1 bis 3 Gew.-% Acesulfamkalium aufweist. Darüber hinaus liegt die Zusammensetzung als Granulat vor.

Die WO 98/42206 A1 betrifft eine lösliche Süßstoffzusammensetzung, welche Ballaststoffe in Kombination mit mindestens einem Süßstoff aufweist. Bei den eingesetzten Ballaststoffen handelt es sich vorzugsweise um Inulin, welches in einer Menge im Bereich von 30 bis 99 % eingesetzt wird. Darüber hinaus wird synthetischer Süßstoff in einer Menge im Bereich von 0,5 bis 5 Gew.-% eingesetzt.

Die US 2009/0324793 A1 betrifft eine natürliche Süßstoffzusammensetzung, welche als Süßstoff Stevioside sowie Dextrin und die Enzyme Glucosyltransferase und Cyclodextringlucanotransferase aufweist.

Die EP 1 652 436 A1 betrifft eine Süßstoffzusammensetzung, welche 21,6 bis 48,3 Gew.-% Inulin, 21,6 bis 59 Gew.-% Polydextrose, 2 bis 48 Gew.-% Maltodextrin sowie geringe Mengen eines Antiagglomeranten und mindestens einen Intensivsüßstoff, wie Sucralose oder Acesulfam-K, enthält.

Ausgehend vom Stand der Technik liegt somit der vorliegenden Erfindung die Aufgabe zugrunde, spezielle Süßstoffzusammensetzungen bereitzustellen, welche die zuvor geschilderten Nachteile der im Stand der Technik bekannten Süßungsmittel verhindern bzw. zumindest verringern.

Eine weitere der vorliegenden Erfindung zugrundeliegende Aufgabe ist darin zu sehen, eine verbesserte Süßstoffzusammensetzung bereitzustellen, welche über weiterführende gesundheitsfördernde Eigenschaften verfügt und welche somit gegenüber den Zusammensetzungen des Standes der Technik ernährungsphysiologisch verbessert ist.

Zudem besteht eine weitere Aufgabe der vorliegenden Erfindung darin, eine verbesserte Süßstoffzusammensetzung bereitzustellen, welche über verbesserte organoleptische Eigenschaften verfügt bzw. anhand derer die organoleptischen Eigenschaften der zu süßenden Nahrungsmittel gezielt eingestellt bzw. maßgeschneidert werden können. Dabei soll die erfindungsgemäße Süßstoffzusammensetzung zudem eine natürlich schmeckende Süße aufweisen.

Zur Lösung der zuvor geschilderten Aufgabe schlägt die vorliegende Erfindung eine Süßstoffzusammensetzung (d. h. ein Süßmittel mit insbesondere reduziertem physiologischem Brennwert bzw. Energiegehalt) nach Anspruch 1 vor; weitere vorteilhafte Ausgestaltungen sind Gegenstand der diesbezüglichen Unteransprüche.

Schließlich ist Gegenstand der vorliegenden Erfindung die Verwendung der Süßstoffzusammensetzung nach der vorliegenden Erfindung gemäß Anspruch 14.

Es versteht sich von selbst, daß im folgenden besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies einer ausdrücklichen Erwähnung bedarf.

Bei allen nachstehend genannten relativen bzw. prozentualen, insbesondere gewichtsbezogenen Mengenangaben ist zudem zu beachten, daß diese im Rahmen der vorliegenden Erfindung vom Fachmann derart auszuwählen sind, daß in der Summe - gegebenenfalls unter Einbeziehung weiterer Komponenten bzw. Inhaltsstoffe bzw. Zusatzstoffe bzw. Bestandteile, insbesondere wie nachfolgend definiert - stets 100 % ergeben. Dies versteht sich für den Fachmann aber von selbst.

Im übrigen gilt, daß der Fachmann anwendungsbezogen oder einzelfallbedingt von den nachfolgend aufgeführten Mengenangaben abweichen kann, ohne daß er den Rahmen der vorliegenden Erfindung verläßt.

Die Anmelderin hat in völlig überraschender Weise herausgefunden, daß die der Erfindung zugrundeliegende Aufgabe gelöst werden kann durch eine spezielle Süßstoffzusammensetzung, welche beispielsweise in Form einer Streusüße oder in Form von Kompaktaten bzw. Tabletten vorliegt, wobei die erfindungsgemäße Süßstoffzusammensetzung vorzugsweise zum Süßen von Lebensmitteln eingesetzt werden kann. Dabei basiert die erfindungsgemäße Süßstoffzusammensetzung zumindest auf einer binären Kombination mindestens eines Süßstoffs einerseits und mindestens eines wasserlöslichen Ballaststoffs andererseits.

Gegenstand der vorliegenden Erfindung - gemäß einem ersten erfindungsgemäßen Aspekt - ist somit eine Süßstoffzusammensetzung, insbesondere mit reduziertem physiologischem Brennwert (Energiegehalt), vorzugsweise zum Süßen von Lebensmitteln, in Form von Granulaten, Pulvern oder Kompaktaten, wobei die Süßstoffzusammensetzung in Kombination
(a) mindestens einen wasserlöslichen Ballaststoff, ausgewählt aus Dextrinen mit 1,2-glykosidischen Bindungen, 1,3-glykosidischen Bindungen, 1,4-glykosidischen Bindungen und/oder 1,6-glykosidischen Bindungen, in einer Menge von 20 bis 95 Gew.-%, bezogen auf die Süßstoffzusammensetzung, wobei der Ballaststoff Fasern in Mengen von 10 bis 90 Gew.-%, bezogen auf den Ballaststoff, aufweist, und
(b) mindestens einen Süßstoff, ausgewählt aus der Gruppe von Aspartam, Acesulfam, Saccharin, Cyclamat, Steviosid und Sucralose sowie Mischungen der vorgenannten Substanzen, in einer Menge von 0,01 bis 70 Gew.-%, bezogen auf die Süßstoffzusammensetzung,
enthält,
wobei das Gewichtsverhältnis von (a) Ballaststoff zu (b) Süßstoff zwischen 30 : 1 und 5 : 1 liegt,
wobei die gewichtsbezogene Süßkraft der Süßstoffzusammensetzung der 1- bis 70fachen Süßkraft von Saccharose entspricht,
wobei der physiologische Brennwert der Süßstoffzusammensetzung (Energiegehalt) im Bereich von 0,5 bis 10 kcal/g liegt und
wobei die Süßstoffzusammensetzung eine Gesamtrestfeuchte von 0,5 bis 5 Gew.-%, bezogen auf die Süßstoffzusammensetzung, aufweist.

Die der Erfindung zugrundeliegende Idee ist somit darin zu sehen, eine Süßstoffzusammensetzung bereitzustellen, welche zum einen mindestens einen Süßstoff und zum anderen mindestens einen wasserlöslichen Ballaststoff aufweist. In diesem Zusammenhang ist es im Rahmen der vorliegenden Erfindung in völlig unerwarteter Weise gelungen, eine ernährungsphysiologisch deutlich verbesserte Süßstoffzusammensetzung bereitzustellen, welche nämlich einerseits einen reduzierten physiologischen Brennwert aufweist und welche andererseits durch die gezielte Verwendung eines speziellen Ballaststoffs einen deutlichen Beitrag zur Verbesserung der Ballaststoffzufuhr mit den damit einhergehenden positiven Aspekten für die Gesundheit aufweist.

Darüber hinaus weist die erfindungsgemäße Zusammensetzung in völlig überraschender Weise auch verbesserte organoleptische Eigenschaften auf, wobei unter Verwendung der erfindungsgemäßen Süßstoffzusammensetzung insbesondere eine natürlich schmeckende Süße bzw. ein natürlicher Geschmack hervorgerufen werden kann. Denn - ohne sich auf diese Theorie festlegen zu wollen - kompensiert die zusätzliche Verwendung des Ballaststoffs den oftmals unnatürlichen Geschmack der entsprechenden Süßstoffe, so daß die eingesetzten Ballaststoffe überraschenderweise nicht nur zu einem verbesserten ernährungsphysiologischen Nutzen, sondern darüber hinaus auch zu einer deutlichen geschmacklichen Verbesserung der Zusammensetzung nach der Erfindung führen, so daß der Süßstoff einerseits und der Ballaststoff andererseits in völlig überraschender Weise synergistisch zusammenwirken.

Weiterhin zeichnet sich die erfindungsgemäße Süßstoffzusammensetzung dadurch aus, daß in Abhängigkeit von der speziellen Auswahl und Abstimmung der Komponenten die organoleptischen Eigenschaften der Süßstoffzusammensetzung an sich bzw. der damit zu süßenden Nahrungsmittel eingestellt werden können, insbesondere was z. B. die Viskosität bzw. Cremigkeit der entsprechenden Nahrungsmittel, beispielsweise in Form von Getränken, anbelangt - und dies bei gleichzeitiger Gewährleistung eines natürlich süßen Geschmacks.

Die erfindungsgemäße Süßstoffzusammensetzung kann in einer Vielzahl von Darreichungsformen bereitgestellt werden, was das Einsatzspektrum bzw. die Anwendbarkeit der erfindungsgemäßen Süßstoffzusammensetzung deutlich erhöht. So kann die erfindungsgemäße Zusammensetzung, welche beispielsweise in Form einer Streusüße oder in Form von Tabletten eingesetzt bzw. bereitgestellt werden kann, zum Süßen von flüssigen, pastösen oder festen Nahrungsmitteln verwendet werden.

Im Ergebnis bietet die erfindungsgemäße Süßstoffzusammensetzung somit die Möglichkeit einer kalorienarmen Süßung, wobei dem menschlichen Körper gleichzeitig wertvolle Ballaststoffe zugeführt werden, welche, wie zuvor angeführt, nicht nur einen positiven Effekt auf die Gesundheit, sondern auch die Eigenschaften der Süßstoffzusammensetzung nach der Erfindung an sich verbessert, insbesondere im Hinblick auf die zuvor angeführten organoleptischen und sensorischen Eigenschaften. Aufgrund der Verwendung der speziellen Inhaltsstoffe weist die erfindungsgemäße Süßstoffzusammensetzung zudem eine verminderte Kariogenität auf.

Ein weiterer zentraler Vorteil der vorliegenden Erfindung kann darin gesehen werden, daß durch die gezielte Kombination von Ballaststoffen einerseits und Süßstoffen andererseits eine hohe Eignung der erfindungsgemäßen Süßstoffzusammensetzung im Rahmen des Ernährungsplanes von Diabetikern vorliegt. Denn - ohne sich auf diese Theorie beschränken zu wollen - werden in der sonstigen Nahrung vorhandene Kohlenhydrate aus ballaststoffreicher Nahrung im Darm langsamer resorbiert, einhergehend mit einem geringeren Blutzuckeranstieg nach erfolgter Nahrungsaufnahme. Dabei fokussiert die vorliegende Erfindung auf den gezielten Einsatz von wasserlöslichen Ballaststoffen.

Hierdurch kann die erfindungsgemäße Süßstoffzusammensetzung für ein großes Spektrum an Lebensmitteln eingesetzt werden, so auch für Getränke oder dergleichen, wobei in diesem Zusammenhang ein Vorteil darin zu sehen ist, daß die mit der erfindungsgemäßen Süßstoffzusammensetzung gesüßten Lebensmittel unmittelbar bzw. zeitnah nach Zugabe der Süßstoffzusammensetzung nach der Erfindung aufgrund der guten Löslichkeit bzw. Dispergierbarkeit der Komponenten verspeist werden können.

Zudem ist es, wie nachfolgend noch angeführt, auf Basis der erfindungsgemäß eingesetzten wasserlöslichen Ballaststoffen möglich, die organoleptischen Eigenschaften der damit zubereiteten Nahrungsmittel gezielt einzustellen bzw. maßzuschneidern. Insbesondere resultiert durch die Verwendung von wasserlöslichen Ballaststoffen bei der Nahrungsaufnahme ein gutes Mundgefühl ohne ein etwaig damit einhergehendes Fremdstoffgefühl.

Was den Begriff "Ballaststoff", wie er im Rahmen der vorliegenden Erfindung verwendet wird, anbelangt, so bezieht sich dieser Begriff insbesondere auf zumindest im wesentlichen von menschlichen Verdauungssekreten nicht verwertbare bzw. verdaubare Substanzen, welche insbesondere pflanzlichen Ursprungs sind. Erfindungsgemäß wird der Ballaststoff in Form von Dextrinen eingesetzt.

Im Rahmen der vorliegenden Erfindung ist der Einsatz von Dextrinen vorgesehen. Denn die Anmelderin hat in überraschender Weise herausgefunden, daß aufgrund der Verwendung von Dextrinen, welche über eine hervorragende Wasserlöslichkeit verfügen, insbesondere die organoleptischen Eigenschaften der erfindungsgemäßen Süßstoffzusammensetzung besonders positiv beeinflußt werden. Denn Dextrine sind weitgehend geschmacksneutral, was gleichermaßen von Vorteil ist. Bei Dextrinen, welche synonym auch als Stärkegummi bezeichnet werden, handelt es sich im allgemeinen um Poly- und Oligosaccharidgemische, welche beispielsweise auf Basis von Weizen- bzw. Maisstärke insbesondere durch trockene Erhitzung und Säureeinwirkung gewonnen werden können. Insbesondere können erfindungsgemäß Dextrine mit 1,2-glykosidischen Bindungen, 1,3-glykosidischen Bindungen, 1,4-glykosidischen Bindungen und/oder 1,6-glykosidischen Bindungen eingesetzt werden. Für weitere Einzelheiten zu Dextrinen kann insbesondere verwiesen werden auf Römpp Chemielexikon, 10. Auflage, Georg-Thieme-Verlag, Stuttgart/New York, Band 2, 1997, Seite 928, Stichwort: "Dextrine" sowie auf die dort referierte Literatur, deren jeweiliger Inhalt durch Bezugnahme eingeschlossen ist.

Der Einsatz von Dextrinen ist zudem dahingehend von Vorteil, als diese zumindest im wesentlichen nicht zu einer Gelbildung neigen. Bei Verwendung derartiger Ballaststoffe werden die mit der erfindungsgemäßen Süßstoffzusammensetzung gesüßten Lebensmittel insbesondere in ihrer Viskosität nicht beeinflußt.

Erfindungsgemäß beträgt die Menge an (a) Ballaststoff höchstens höchstens 95 Gew.-%, bezogen auf die Süßstoffzusammensetzung. Gleichermaßen beträgt die Menge an (a) Ballaststoff erfindungsgemäß 20 bis 95 Gew.-%, bezogen auf die Süßstoffzusammensetzung.

Die Menge an (a) Ballaststoff kann insbesondere im Hinblick auf die jeweils vorgesehene Darreichungsform der erfindungsgemäßen Süßstoffzusammensetzung variieren bzw. abgestimmt werden, wie nachfolgend noch angeführt.

Im Rahmen der vorliegenden Erfindung ist es gleichermaßen vorgesehen, daß (a) der Ballaststoff insbesondere wasserdispergierbare Fasern aufweist. Hierdurch können die organoleptischen Eigenschaften weiter eingestellt werden, insbesondere im Hinblick auf ein "volleres Mundgefühl" der konsumierten Nahrungsmittel, welche mit der erfindungsgemäßen Süßstoffzusammensetzung zubereitet sind. Diesbezüglich stellt sich gleichermaßen kein Fremdstoffgefühl im Mund ein. Erfindungsgemäß kann (a) der Ballaststoff die Fasern in Mengen von höchstens 90 Gew.-%, insbesondere höchstens 80 Gew.-%, vorzugsweise höchstens 70 Gew.-%, bevorzugt höchstens 60 Gew.-%, besonders bevorzugt höchstens 50 Gew.-%, bezogen auf (a) den Ballaststoff, aufweisen. Erfindungsgemäß kann (a) der Ballaststoff die Fasern in Mengen von 10 bis 90 Gew.-%, insbesondere 20 bis 80 Gew.-%, vorzugsweise 30 bis 70 Gew.-%, besonders bevorzugt 40 bis 60 Gew.-%, bezogen auf (a) den Ballaststoff, aufweisen. Bei den Fasern handelt es sich insbesondere um pflanzliche (Ballaststoff-)Fasern, welche den Fachmann als solche wohlbekannt sind.

Was den im Rahmen der vorliegenden Erfindung verwendeten Begriff "Süßstoff" anbelangt, so versteht man hierunter im allgemeinen - im Unterschied zu Zuckeraustauschstoffen - Verbindungen synthetischer oder natürlicher Herkunft, die keinen oder im Verhältnis zur Süßkraft einen vernachlässigbaren physiologischen Brennwert besitzen, weswegen sie im Englischen auch als *"non-nutritive sweete*ners" bezeichnet werden. Derartige Süßstoffe weisen eine um ein Vielfaches höhere Süßkraft als Saccharose bzw. Kristallzucker auf. Die Süßkraft einer Verbindung ist durch die Verdünnung gegeben, bei der sie ebenso süß wie eine Saccharoselösung schmeckt (isosüße Lösung). Für weitere Einzelheiten zu dem Begriff der Süßstoffe kann insbesondere verwiesen werden auf Römpp Chemielexikon, 10. Auflage, Georg-Thieme-Verlag, Stuttgart/New York, Band 5, 1998, Seiten 4302 bis 4304, Stichwort: "Süßstoffe" sowie die dort referierte Literatur, deren jeweiliger Inhalt hiermit durch Bezugnahme eingeschlossen ist.

Im Rahmen der vorliegenden Erfindung ist (b) der Süßstoff ausgewählt aus der Gruppe von Aspartam, Acesulfam, Saccharin, Cyclamat, Steviosid und Sucralose sowie Mischungen der vorgenannten Substanzen. Die Verwendung der vorgenannten Süßstoffe ist insbesondere im Hinblick auf die Gewährleistung eines besonders natürlichen Geschmacks von Vorteil, welcher sich insbesondere in gezielter Kombination mit (a) dem Ballaststoff einstellt, wobei diesbezüglich im Hinblick auf die Komponente (a) die Verwendung von Dextrin zu besonders guten Ergebnissen führt. Insbesondere eignet sich auch eine Kombination von Cyclamat und Saccharin, insbesondere in einem gewichtsbezogenen Verhältnis von etwa 10 : 1.

Erfindungsgemäß beträgt die Menge an (b) Süßstoff höchstens 70 Gew.-%, bezogen auf die Süßstoffzusammensetzung. Üblicherweise beträgt die Menge an (b) Süßstoff 0,01 bis 70 Gew.-%, insbesondere 0,1 bis 70 Gew.-%, vorzugsweise 1 bis 70 Gew.-%, besonders bevorzugt 5 bis 70 Gew.-%, bezogen auf die Süßstoffzusammensetzung, betragen.

Zudem ist eine erfindungsgemäße Zusammensetzung besonders vorteilhaft, bei welcher das Gewichtsverhältnis von (a) Ballaststoff zu (b) Süßstoff zwischen 30 : 1 und 5 : 1 liegt.

Durch das spezielle Verhältnis von (a) Ballaststoff einerseits und (b) Süßstoff andererseits können sowohl die Süßkraft als auch die organoleptischen Eigenschaften entsprechend eingestellt werden.

Im allgemeinen kann die erfindungsgemäße Süßstoffzusammensetzung noch weitere Stoffe enthalten, welche zur Süße der erfindungsgemäßen Süßstoffzusammensetzung beitragen. So kann es im allgemeinen vorgesehen sein, daß die erfindungsgemäße Süßstoffzusammensetzung außerdem noch (c) Zuckeraustauschstoff, insbesondere mindestens einen Zuckeralkohol, und/oder (d) Zucker enthält. Hierdurch kann die Süße weiter eingestellt werden, insbesondere können in synergistischer Weise gemeinsam mit (a) dem Ballaststoff die natürlichen Geschmackseigenschaften der erfindungsgemäßen Süßstoffzusammensetzung weiter eingestellt bzw. noch weiterführend verbessert werden, wobei insbesondere im Hinblick auf die erfindungsgemäß einsetzbaren Zuckeraustauschstoffe eine noch weiterführende Verbesserung der natürlichen Geschmackseigenschaften zu beobachten ist, selbst wenn diese Zuckeraustauschstoffe im Vergleich zur Wirkung in geringen Mengen zugegeben sind.

Die erfindungsgemäß einsetzbaren Zuckeralkohole werden im allgemeinen zu den sogenannten Zuckeraustauschstoffen gezählt. Unter dem Begriff der Zuckeraustauschstoffe versteht man eine Sammelbezeichnung für Stoffe, welche anstelle von Saccharose zur Süßung von Lebensmitteln eingesetzt werden können. Im Gegensatz zu den mitunter intensiv schmeckenden Süßstoffen, von denen der Begriff der Zuckeraustauschstoffe im allgemeinen abgegrenzt wird, werden Zuckeraustauschstoffe technologisch wie Saccharose eingesetzt, d. h. sie besitzen einen "Körper" und einen physiologischen Brennwert ("nutritive Zuckeraustauschstoffe"). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die davon verschiedenen Süßstoffe werden gemeinsam als Süßungsmittel bezeichnet. Für weitergehende Einzelheiten zu dem Begriff der Zuckeraustauschstoffe kann beispielsweise verwiesen werden auf Römpp Chemielexikon, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 9. Auflage, Georg-Thieme-Verlag, Stuttgart/New York, Seite 955, Stichwort: "Zuckeraustauschstoffe" sowie auf die dort jeweils referierte Literatur, deren jeweiliger Inhalt hiermit durch Bezugnahme eingeschlossen ist.

Der Begriff der zu den Zuckeraustauschstoffen zählenden Zuckeralkohole (Polyole), wie er erfindungsgemäß verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Chemielexikon, 10. Auflage, Georg-Thieme-Verlag, Stuttgart/New York, Band 6, 1999, Seite 5097, Stichwort: "Zuckeralkohole" und auf Römpp Lexikon Lebensmittelchemie, 9. Auflage, Georg-Thieme-Verlag, Stuttgart/New York, 1995, Seiten 1953/1954, Stichwort: "Zuckeralkohole" sowie auf die dort jeweils referierte Literatur, deren jeweiliger Inhalt hiermit durch Bezugnahme eingeschlossen ist.

Insbesondere kann die erfindungsgemäße Süßstoffzusammensetzung somit außerdem (c) mindestens einen Zuckeraustauschstoff, vorzugsweise mindestens einen Zuckeralkohol, aufweisen. Diesbezüglich kann der Zuckeralkohol ausgewählt sein aus der Gruppe von Erythrit, Mannit, Xylit, Sorbit, Isomaltit, Maltit, Lactit, Galactit und deren Mischungen, vorzugsweise Erythrit. Üblicherweise kann die Menge an (c) Zuckeraustauschstoff 1 bis 50 Gew.-%, insbesondere 5 bis 40 Gew.-%, bevorzugt 10 bis 30 Gew.-%, bezogen auf die Süßstoffzusammensetzung, betragen.

Beispielsweise kann die erfindungsgemäße Süßstoffzusammensetzung außerdem (d) mindestens einen Zucker enthalten. Diesbezüglich kann (d) der Zucker ausgewählt sein aus Mono- oder Disacchariden, insbesondere aus der Gruppe von Saccharose, Mannose, Maltose, Dextrose, Lactose, Glucose, Xylose, Isomaltulose, Trehalose und deren Mischungen, insbesondere Lactose und/oder Trehalose. Üblicherweise kann die Menge an (d) Zucker 1 bis 30 Gew.-%, insbesondere 3 bis 25 Gew.-%, bevorzugt 5 bis 20 Gew.-%, bezogen auf die Süßstoffzusammensetzung, betragen.

Ferner können gemäß einer weiteren Ausführungsform weitere Inhaltsstoffe oder Additive in der erfindungsgemäßen Zusammensetzung enthalten sein.

So kann die erfindungsgemäße Süßstoffzusammensetzung außerdem (e) weitere Inhalts- und/oder Hilfsstoffe umfassen. Diesbezüglich können (e) die weiteren Inhalts- oder Hilfsstoffe ausgewählt sein aus Aromen oder Aromastoffen, Säuerungsmitteln (z. B. Nitrat), Farbstoffen, Vitaminen, Mineralstoffen, Stabilisatoren und/oder Konservierungsmitteln (z. B. Sorbinsäure bzw. deren Salze), Füllstoffen, Preßmitteln, Sprengmitteln, Schmiermitteln und/oder Gleitmitteln, konsistenzsteuernden Mitteln, Verdickungsmitteln und deren Mischungen.

Im Rahmen der vorliegenden Erfindung ist es möglich, die Quantität der Süße, ausgedrückt durch die Süßkraft, entsprechend einzustellen. Erfindungsgemäß entspricht die gewichtsbezogene Süßkraft der Süßstoffzusammensetzung der 1- bis 70fachen, insbesondere der 10- bis 70fachen, vorzugsweise der 20- bis 70fachen Süßkraft von Saccharose. Auf dieser Basis ist es im Rahmen der vorliegenden Erfindung möglich, die erfindungsgemäße Süßstoffzusammensetzung beispielsweise derart einzustellen, daß diese eine vergleichbare Süßkraft wie Saccharose an sich aufweist, so daß sich hinsichtlich der Dosierung entsprechend vergleichbare Mengen bzw. Volumina ergeben. Weiterhin kann die Süßkraft jedoch auch deutlich größer als die Süßkraft von Saccharose eingestellt werden, so daß im Ergebnis wesentlich geringere Mengen der erfindungsgemäßen Süßstoffzusammensetzung zum Erhalt einer bestimmten Süße eingesetzt werden können.

Die erfindungsgemäße Süßstoffzusammensetzung bietet, wie zuvor angeführt, die Möglichkeit einer kalorienarmen Süßung. Gemäß einer weiteren Ausführungsform liegt der physiologische Brennwert der Süßstoffzusammensetzung (Energiegehalt) im Bereich von 0,5 bis 10 kcal/g, insbesondere im Bereich von 2 bis 6 kcal/g, vorzugsweise im Bereich von 2,5 bis 3,6 kcal/g.

Weitere Vorteile der erfindungsgemäßen Zusammensetzung liegen in ihrer leichten Verarbeitbarkeit zu entsprechenden Darreichungsformen. Die diesbezüglichen Verarbeitungsschritte sind dem Fachmann als solchen wohlbekannt, so daß es diesbezüglich keiner weiteren Ausführungen bedarf.

Erfindungsgemäß kann die Süßstoffzusammensetzung (i) in Form eines Granulates und/oder Pulvers und/oder in Form von Agglomeraten, insbesondere als Streusüße bzw. (ii) in Form von Kompaktaten, insbesondere als Tabletten und/oder Pillen, vorzugsweise als Süßtablette bzw. als Süßstofftablette, vorliegen.

Gemäß einer erfindungsgemäß bevorzugten Ausführungsform kann die Süßstoffzusammensetzung nach der Erfindung somit (i) in Form eines Granulates und/oder Pulvers und/oder in Form von Agglomeraten, insbesondere als Streusüße, vorliegen.

In diesem Zusammenhang werden unter dem Begriff "Granulat" insbesondere Anordnungen von Granulatkörnchen verstanden, wobei es sich bei den jeweiligen Granulatkörnern beispielsweise um asymmetrische Aggregate aus Pulverpartikeln handeln kann. Das Granulat bzw. die Granulatkörnchen weisen im allgemeinen keine harmonische bzw. gleichmäßige geometrische Form auf; die Form einer Kugel, eines Stäbchens, eines Zylinders usw. ist im allgemeinen nur ungefähr und andeutungsweise erhalten. Die Oberfläche der einzelnen Granulatkörnchen kann im allgemeinen uneben sein. Zudem können die Granulatkörner in vielen Fällen mehr oder weniger porös sein. Zu weiteren Einzelheiten zu dem Begriff der Granulate kann insbesondere verwiesen werden auf Römpp Chemielexikon, 10. Auflage, Georg-Thieme-Verlag, Stuttgart/New York, Band 2, 1997, Seite 1600, Stichwort: "Granulate", sowie auf die dort referierte Literatur, deren jeweiliger Inhalt durch Bezugnahme eingeschlossen ist.

Sofern die erfindungsgemäße Süßstoffzusammensetzung in Form eines Granulates und/oder Pulvers und/oder in Form von Agglomeraten, insbesondere in Form von Streusüße, vorliegt, ist es vorteilhaft, wenn die erfindungsgemäße Süßstoffzusammensetzung eine Schüttdichte von 20 bis 600 g/l, insbesondere 30 bis 500 g/l, vorzugsweise 40 bis 400 g/l, bevorzugt 50 bis 300 g/l, besonders bevorzugt 60 bis 200 g/l, ganz besonders bevorzugt 70 bis 90 g/l, aufweist.

Im allgemeinen wird unter dem Begriff der Schüttdichte der Quotient aus der Masse und dem eingenommenen Volumen, welches neben den Partikeln auch die Zwischenräume zwischen den einzelnen Partikeln und, falls zusätzlich vorhanden, auch Hohlräume (z. B. Poren) der Partikel einschließt, verstanden. Zur Bestimmung der Schüttdichten von Pulvern bzw. Granulaten bzw. Agglomeraten kann auf die DIN ISO 607:1984-01 verwiesen werden. Man bestimmt die Schüttdichte, beispielsweise indem man die Zusammensetzung in einen Meßkasten, Meßbecher, Meßzylinder oder dergleichen schüttet und das Gewicht feststellt. Höher als die Schüttdichte, deren Reziprokes das Schüttvolumen ist, liegt die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Sofern die erfindungsgemäße Süßstoffzusammensetzung in Form eines kornförmigen Granulats vorliegt, sollte das Granulat insbesondere eine Partikelgröße von 0,01 bis 6 mm, insbesondere 0,05 bis 4 mm, vorzugsweise 0,075 bis 2 mm, bevorzugt 0,1 bis 1 mm, besonders bevorzugt 0,1 bis 0,5 mm, aufweisen.

Die erfindungsgemäße Süßstoffzusammensetzung in Form eines Granulates bzw. Pulvers oder in Form von Agglomeraten sollte zudem einen gewissen Feuchtegehalt (Restfeuchte) aufweisen. So sollte die erfindungsgemäße Süßstoffzusammensetzung eine Gesamtrestfeuchte von 0,5 bis 8 Gew.-%, insbesondere 1 bis 5 Gew.-%, vorzugsweise 2 bis 4 Gew.-%, bezogen auf die Süßstoffzusammensetzung, aufweisen.

Die Einstellung des Feuchtegehalts bzw. der Gesamtfeuchte in dem Granulat bzw. Pulver bzw. Agglomerat dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung bzw. des Granulats und umfaßt somit sowohl zugegebene Feuchtigkeit, beispielsweise in Form von Wasser, als auch bereits in den Komponenten inhärent vorhandenen Feuchtigkeit, wie beispielsweise Kristallwasser oder dergleichen.

Wie zuvor angeführt, kann in bezug auf die Darreichung der erfindungsgemäßen Süßstoffzusammensetzung der relative Gehalt an (a) Ballaststoff und/oder (b) Süßstoff verhältnismäßig hohe Werte einnehmen: So kann die Menge an (a) Ballaststoff 50 bis 99,5 Gew.-%, insbesondere 70 bis 99 Gew.-%, vorzugsweise 80 bis 98 Gew.-%, besonders bevorzugt 90 bis 97 Gew.-%, bezogen auf die Süßstoffzusammensetzung, betragen. Gleichermaßen kann die Menge an (b) Süßstoff 0,5 bis 50 Gew.-%, insbesondere 1 bis 35 Gew.-%, vorzugsweise 2 bis 20 Gew.-%, besonders bevorzugt 3 bis 10 Gew.-%, bezogen auf die Süßstoffzusammensetzung, betragen.

Hinsichtlich der Darreichung der erfindungsgemäßen Süßstoffzusammensetzung in Form von Granulaten und/oder Pulvern und/oder Agglomeraten ist es von Vorteil, wenn als Granulatbildner (a) die Ballaststoffe, insbesondere in Form von Dextrinen, und/oder (b) die Süßstoffe und gegebenenfalls (c) Zuckeraustauschstoffe, insbesondere Zuckeralkohole, (d) Zucker und/oder Stärkederivate eingesetzt sind. Die entsprechenden Inhaltsstoffe nehmen somit gewisserweise eine Doppelfunktion ein, was von Vorteil ist, da darüber hinaus keine weiteren Granulatbildner erforderlich sind.

Im allgemeinen kann die erfindungsgemäße Süßstoffzusammensetzung in Form von Granulaten und/oder Pulver und/oder Agglomeraten, insbesondere die Streusüße, durch Sprühtrocknung, insbesondere durch Sprühtrocknung erhältlich sein.

In diesem Zusammenhang kann beispielsweise zum Erhalt der erfindungsgemäßen Süßstoffzusammensetzung in Form von Granulaten und/oder Pulver und/oder Agglomeraten, insbesondere in Form der Streusüße, derart vorgegangen werden, daß die jeweiligen Inhaltsstoffe bzw. Komponenten miteinander gemischt und in Lösung gebracht werden, wobei anschließend eine Sprühtrocknung, beispielsweise mittels herkömmlicher Granulierverfahren, durchgeführt werden kann. Die diesbezüglichen Verfahren sind dem Fachmann wohlbekannt, so daß es in diesem Zusammenhang keiner weiterführenden Ausführungen bedarf.

Gemäß einer weiteren erfindungsgemäß bevorzugten Ausführungsform kann die erfindungsgemäße Süßstoffzusammensetzung (ii) in Form von Kompaktaten, insbesondere als Tabletten und/oder Pillen, vorzugsweise als Süßtablette, vorliegen.

In diesem Zusammenhang ist auch die rein äußere Form bzw. Erscheinungsform von Bedeutung. Gemäß einer besonderen Ausführungsform weist die Form der Kompaktate, insbesondere der Tabletten und/oder Pillen, vorzugsweise der Süßtabletten, in deren durchschnittlich längsten Ausdehnung, insbesondere in deren durchschnittlichen Länge oder in deren durchschnittlichen Durchmesser, ein Maß von 0,5 bis 10 mm, insbesondere 1 bis 8 mm, vorzugsweise 4 bis 6 mm, auf. Üblicherweise weist die Form der Kompaktate, insbesondere der Tabletten und/oder Pillen, vorzugsweise der Süßtabletten, in deren durchschnittlich größten Höhe, insbesondere in deren durchschnittlichen Dicke, ein Maß von 0,5 bis 5 mm, insbesondere 1 bis 4 mm, vorzugsweise 1,5 bis 3 mm, bevorzugt 1,8 bis 2,8 mm, auf. Wenn beispielsweise die Kompaktate die Form von quaderförmigen Tabs aufweisen, ist die Länge des Quaders die längste Ausdehnung, und im Fall von zylindrischen Tabletten oder Pillen der Durchmesser.

Hinsichtlich des Absolutgewichtes kann das mittlere Gewicht der einzelnen Kornpaktate, Tabletten, Pillen oder dergleichen jeweils 10 und 200 mg, vorzugsweise 25 und 100 mg, insbesondere zwischen 40 und 80 mg, vorzugsweise zwischen 45 bis 60 mg, betragen.

Was die erfindungsgemäße Süßstoffzusammensetzung in Form der Kompaktate, insbesondere der Tabletten und/oder Pillen, vorzugsweise der Süßtabletten, weiter anbelangt, so kann die Süßstoffzusammensetzung diesbezüglich eine Gesamtrestfeuchte von 0,5 bis 8 Gew.-%, insbesondere 1 bis 5 Gew.-%, vorzugsweise 2 bis 4 Gew.-%, bezogen auf die Süßstoffzusammensetzung, aufweisen.

Aufgrund der geforderten Handhabbarkeit sollte zudem eine gewisse Festigkeit (Tablettenfestigkeit, insbesondere Bruchfestigkeit), der in Form von Kompaktaten, insbesondere Tabletten und/oder Pillen, vorzugsweise Süßtabletten, vorliegenden Süßstoffzusammensetzung nach der Erfindung gegeben sein: Üblicherweise weist die Süßstoffzusammensetzung dann eine Festigkeit (Tablettenfestigkeit), insbesondere Bruchfestigkeit, von mindestens 5 Newton, insbesondere mindestens 6 Newton, vorzugsweise im Bereich von 5 bis 100 Newton, besonders bevorzugt 5 bis 50 Newton, ganz besonders bevorzugt 6 bis 30 Newton, auf.

Hinsichtlich der Kompaktate bzw. Tabletten bzw. Pillen kann gleichermaßen ein verhältnismäßig hoher relativer Gehalt an (a) Ballaststoff bzw. (b) Süßstoff realisiert sein: So kann die Menge an (a) Ballaststoff in bezug auf die in Form von Kompaktaten, insbesondere Tabletten und/oder Pillen, vorzugsweise Süßtabletten, vorliegende Stoffzusammensetzung nach der Erfindung 30 bis 99,5 Gew.-%, insbesondere 35 bis 99 Gew.-%, vorzugsweise 40 bis 98 Gew.-%, besonders bevorzugt 45 bis 97 Gew.-%, bezogen auf die Süßstoffzusammensetzung, betragen. In diesem Zusammenhang kann die Menge an (b) Süßstoff 20 bis 90 Gew.-%, insbesondere 25 bis 85 Gew.-%, vorzugsweise 30 bis 80 Gew.-%, bezogen auf die Süßstoffzusammensetzung, betragen.

Die Herstellung der erfindungsgemäßen Süßstoffzusammensetzung in Form der Kompaktate, insbesondere Tabletten und/oder Pillen, vorzugsweise Süßtabletten, kann durch den gezielten Einsatz mindestens eines Schmiermittels und/oder Gleitmittels verbessert werden. In diesem Zusammenhang kann die Süßstoffzusammensetzung gegebenenfalls außerdem mindestens ein Schmiermittel und/oder Gleitmittel enthalten. Diesbezüglich kann das Schmiermittel und/oder Gleitmittel ausgewählt sein aus Aminosäuren, insbesondere α-Aminosäuren; Polyethern; Fettsäuren und deren Salzen oder Estern; Talkum; aromatischen organischen Säuren oder deren Salzen, insbesondere Benzoesäure oder Benzoaten; sowie deren Mischungen, und bevorzugt eine Aminosäure, insbesondere α-Aminosäure, besonders bevorzugt Leucin, sein. Üblicherweise kann die Menge an Schmiermittel und/oder Gleitmittel 0,1 bis 50 Gew.-%, insbesondere 1 bis 30 Gew.-%, vorzugsweise 5 bis 15 Gew.-%, besonders bevorzugt 6 bis 12 Gew.-%, bezogen auf die Süßstoffzusammensetzung, betragen.

Darüber hinaus kann die erfindungsgemäße Süßstoffzusammensetzung in Form der Kompaktate, insbesondere Pillen und/oder Tabletten, insbesondere Süßtabletten, gegebenenfalls außerdem mindestens einen weiteren Inhaltsstoff und/oder mindestens ein weiteres Additiv, insbesondere mindestens ein konsistenzsteuerndes Mittel und/oder mindestens ein Verdickungsmittel, enthalten. Dabei kann der weitere Inhaltsstoff und/oder das weitere Additiv mindestens ein Polysaccharid oder ein Polysaccharidgemisch sein, vorzugsweise ausgewählt aus α-1,4/α-1,6-glykosidisch verknüpften Polysacchariden bzw. vorzugsweise ausgewählt aus Stärke und Stärkederivaten, insbesondere Maisstärke, Cellulose oder Cellulosederivaten, insbesondere Natriumcarboxymethylcellulose, sowie deren Mischungen. Üblicherweise kann die Menge an weiterem Inhaltsstoff und/oder weiterem Additiv, insbesondere konsistenzsteuerndem Mittel und/oder Verdickungsmittel, 1 bis 30 Gew.-%, insbesondere 5 bis 20 Gew.-%, bevorzugt 10 bis 15 Gew.-%, bezogen auf die Süßstoffzusammensetzung, betragen.

Zur besseren Auflösbarkeit der erfindungsgemäßen Süßstoffzusammensetzung in einem Nahrungsmittel kann es gegebenenfalls vorgesehen sein, daß die Süßstoffzusammensetzung in Form von Kompaktaten, insbesondere Tabletten und/oder Pillen, insbesondere Süßtabletten, außerdem mindestens ein Sprengmittel enthält. Diesbezüglich kann das Sprengmittel ein unter Feuchtigkeitseinfluß gasbildendes Mittel, insbesondere ein Brausezusatz, sein. Zudem kann das Sprengmittel ausgewählt sein aus Alkali- und/oder Erdalkalicarbonaten und/oder -hydrogencarbonaten, insbesondere Natriumhydrogencarbonat, Carbonsäuren, insbesondere Citronensäure, und Hydroxycarbonsäuren, wie Weinsäure, und deren Kombinationen. Im allgemeinen kann die Menge an Sprengmittel diesbezüglich 0,1 bis 20 Gew.-%, insbesondere 1 bis 10 Gew.-%, vorzugsweise 2 bis 5 Gew.-%, bezogen auf die Süßstoffzusammensetzung, betragen.

Gleichermaßen können die vorgenannten Inhaltsstoffe bzw. Additive bzw. Sprengmittel auch einer Süßstoffzusammensetzung zugegeben sein, welche in Form von Granulaten, in Form eines Pulvers bzw. in Form von Agglomeraten vorliegt.

Die Herstellung der Kompaktate bzw. Tabletten bzw. Pillen ist dem Fachmann wohlbekannt, so daß es diesbezüglich keiner weiteren Ausführung bedarf. Insbesondere können die jeweiligen Inhaltsstoffe durch Verpressen in die jeweiligen Kompaktate überführt werden, insbesondere in Form einer Mischung. Gemäß einer erfindungsgemäßen Ausführungsform kann das Kompaktieren unter Druck erfolgen. Der Fachmann führt das Kompaktieren bzw. Verpressen unter Druck in einer ihm an sich bekannten Art und Weise durch. Vorteilhafterweise erfolgt das Kompaktieren, insbesondere Verpressen, unter Umgebungs- bzw. Normalbedingungen (d. h. Umgebungstemperatur, insbesondere 20 bis 35 °C), wobei im Rahmen des Kompaktierens bzw. Verpressens ein durch den Kompaktierungsvorgang induzierte Erwärmung stattfinden kann.

Weiterer Gegenstand der vorliegenden Erfindung - gemäß einem zweiten Aspekt der vorliegenden Erfindung - ist die Verwendung der Süßstoffzusammensetzung gemäß dem ersten Erfindungsaspekt zum Süßen von Lebensmitteln, insbesondere von Getränken oder anderen flüssigen bis pastösen Nahrungsmitteln oder aber von festen Nahrungsmitteln.

Für weitergehende diesbezügliche Einzelheiten zu diesem Erfindungsaspekt kann Bezug genommen werden auf die obigen Ausführungen zu dem ersten Erfindungsaspekt, welche in bezug auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch nicht beschränken.

### AUSFÜHRUNGSBEISPIELE:

Auch für die nachfolgenden Ausführungsbeispiele gilt, dass sich die einzelnen Komponenten in der Summe zu 100 Gew.-% ergänzen.

### 1. Beispielrezepturen für erfindungsgemäße Süßstoffzusammensetzungen in Form von Streusüße:

Eine erfindungsgemäße Süßstoffzusammensetzung in Form einer Streusüße basiert auf der nachfolgend angeführten Zusammensetzung:
- 80 bis 99 Gew.-% Ballaststoff (Dextrin mit einem Fasergehalt von 50 Gew.-%, bezogen auf den Ballaststoff);
- 3 bis 10 Gew.-% Süßstoff, insbesondere ausgewählt aus Aspartam, Acesulfam, Saccharin, Cyclamat, Steviosid und Sucralose;
- 1 bis 10 Gew.-% Stabilisatoren (Sorbinsäure)

Die vorgenannten Gewichtsangaben beziehen sich auf die erfindungsgemäße Süßstoffzusammensetzung als solche. Die Ausgangsmaterialien entsprechend der vorgenannten Ausgangsrezeptur werden zunächst in Wasser gelöst bzw. dispergiert. Die Lösung weist einen Trockensubstanzanteil bzw. ein Trockengewichtsanteil von 60 bis 70 Gew.-%, bezogen auf die Lösung, auf. Vor der Sprühtrocknung werden die resultierenden Lösungen aus mikrobiologischen Gründen erhitzt. Nachfolgend wird die auf diese Weise behandelte Lösung einer Sprühtrocknung unter den dem Fachmann an sich bekannten Bedingungen unterzogen, so daß entsprechende Granulate resultieren (mittlere Teilchengröße der Granulate, bestimmt als D₅₀-Wert, im Bereich von 0,05 bis 4 mm, vorzugsweise 0,1 bis 0,5 mm). Die Schüttdichten der betreffenden Tafel- bzw. Streusüße wird im Bereich von 50 bis 300 g/l, vorzugsweise 80 bis 100 g/l, eingestellt.

### 2. Herstellung erfindungsgemäßer Süß- bzw. Süßstofftabletten als Basisrezeptur:

Für die erfindungsgemäße Süßstoffzusammensetzung in Form von Tabletten dient die folgende Zusammensetzung:
- 30 bis 80 Gew.-% Ballaststoff (Dextrin mit einem Fasergehalt von 50 Gew.-%, bezogen auf den Ballaststoff);
- 30 bis 50 Gew.-% Süßstoff, insbesondere ausgewählt aus Aspartam, Acesulfam, Saccharin, Cyclamat, Steviosid und Sucralose;
- gegebenenfalls 1 bis 10 Gew.-% Gleitmittel (z. B. Leucin);
- gegebenenfalls 1 bis 10 Gew.-% Sprengmittel (beispielsweise in Form eines Brausezusatzes aus Weinsäure/Citronensäure und Natriumhydrogencarbonat);
- gegebenenfalls 1 bis 10 Gew.-% Stabilisatoren (z. B. in Form von Sorbinsäure)

Die vorgenannte Rezeptur wird in Form einer Mischung verpreßt. Die Verpressung erfolgt dabei ausgehend von einer Trockenmischung der einzelnen Komponenten zu einer homogenen Masse, welche anschließend auf entsprechenden Tablettenpressen zu den erfindungsgemäßen Tabletten verpreßt wird. Es resultieren Süßtabletten bzw. Süßstofftabletten mit einem durchschnittlichen Teilchendurchmesser von etwa 5 mm und Dicken von 1,8 bis 2,8 mm. Die Tabletten weisen ein Gewicht von 45 bis 60 mg pro Tablette auf.

## Patentansprüche

1. Süßstoffzusammensetzung, insbesondere mit reduziertem physiologischem Brennwert (Energiegehalt), vorzugsweise zum Süßen von Lebensmitteln, in Form von Granulaten, Pulvern oder Kompaktaten, wobei die Süßstoffzusammensetzung in Kombination
(a) mindestens einen wasserlöslichen Ballaststoff, ausgewählt aus Dextrinen mit 1,2-glykosidischen Bindungen, 1,3-glykosidischen Bindungen, 1,4-glykosidischen Bindungen und/oder 1,6-glykosidischen Bindungen, in einer Menge von 20 bis 95 Gew.-%, bezogen auf die Süßstoffzusammensetzung, wobei der Ballaststoff Fasern in Mengen von 10 bis 90 Gew.-%, bezogen auf den Ballaststoff, aufweist,
und
(b) mindestens einen Süßstoff, ausgewählt aus der Gruppe von Aspartam, Acesulfam, Saccharin, Cyclamat, Steviosid und Sucralose sowie Mischungen der vorgenannten Substanzen, in einer Menge von 0,01 bis 70 Gew.-%, bezogen auf die Süßstoffzusammensetzung,
enthält,
wobei das Gewichtsverhältnis von (a) Ballaststoff zu (b) Süßstoff zwischen 30 : 1 und 5 : 1 liegt,
wobei die gewichtsbezogene Süßkraft der Süßstoffzusammensetzung der 1- bis 70fachen Süßkraft von Saccharose entspricht,
wobei der physiologische Brennwert der Süßstoffzusammensetzung (Energiegehalt) im Bereich von 0,5 bis 10 kcal/g liegt und
wobei die Süßstoffzusammensetzung eine Gesamtrestfeuchte von 0,5 bis 5 Gew.-%, bezogen auf die Süßstoffzusammensetzung, aufweist.

2. Süßstoffzusammensetzung nach Anspruch 1, wobei die Menge an (a) Ballaststoff 30 bis 95 Gew.-%, besonders bevorzugt 40 bis 95 Gew.-%, ganz besonders bevorzugt 50 bis 95 Gew.-%, bezogen auf die Süßstoffzusammensetzung, beträgt.

3. Süßstoffzusammensetzung nach einem der vorangehenden Ansprüche, wobei (a) der Ballaststoff die Fasern in Mengen von 30 bis 70 Gew.-%, insbesondere 20 bis 80 Gew.-%, vorzugsweise 30 bis 70 Gew.-%, besonders bevorzugt 40 bis 60 Gew.-%, bezogen auf (a) den Ballaststoff, aufweist.

4. Süßstoffzusammensetzung nach einem der vorangehenden Ansprüche, wobei die Menge an (b) Süßstoff 0,1 bis 70 Gew.-%, vorzugsweise 1 bis 70 Gew.-%, besonders bevorzugt 5 bis 70 Gew.-%, bezogen auf die Süßstoffzusammensetzung, beträgt.

5. Süßstoffzusammensetzung nach einem der vorangehenden Ansprüche, wobei die Süßstoffzusammensetzung außerdem (c) mindestens einen Zuckeraustauschstoff, vorzugsweise mindestens einen Zuckeralkohol, aufweist, insbesondere wobei der Zuckeralkohol ausgewählt ist aus der Gruppe von Erythrit, Mannit, Xylit, Sorbit, Isomaltit, Maltit, Lactit, Galactit und deren Mischungen, vorzugsweise Erythrit, und/oder insbesondere wobei die Menge an (c) Zuckeraustauschstoff 1 bis 50 Gew.-%, insbesondere 5 bis 40 Gew.-%, bevorzugt 10 bis 30 Gew.-%, bezogen auf die Süßstoffzusammensetzung, beträgt.

6. Süßstoffzusammensetzung nach einem der vorangehenden Ansprüche, wobei die Süßstoffzusammensetzung außerdem (d) mindestens einen Zucker enthält, insbesondere wobei (d) der Zucker ausgewählt ist aus Mono- oder Disacchariden, insbesondere aus der Gruppe von Saccharose, Mannose, Maltose, Dextrose, Lactose, Glucose, Xylose, Isomaltulose, Trehalose und deren Mischungen, vorzugsweise Lactose und/oder Trehalose, und/oder insbesondere wobei die Menge an (d) Zucker 1 bis 30 Gew.-%, insbesondere 3 bis 25 Gew.-%, bevorzugt 5 bis 20 Gew.-%, bezogen auf die Süßstoffzusammensetzung, beträgt.

7. Süßstoffzusammensetzung nach einem der vorangehenden Ansprüche, wobei die Süßstoffzusammensetzung außerdem (e) weitere Inhalts- und/oder Hilfsstoffe umfaßt, insbesondere ausgewählt aus Aromen oder Aromastoffen, Säuerungsmitteln, Farbstoffen, Vitaminen, Mineralstoffen, Stabilisatoren und/oder Konservierungsmitteln, Füllstoffen, Preßmitteln, Sprengmitteln, Schmiermitteln und/oder Gleitmitteln, konsistenzsteuernden Mitteln, Verdickungsmitteln und deren Mischungen.

8. Süßstoffzusammensetzung nach einem der vorangehenden Ansprüche, wobei die gewichtsbezogene Süßkraft der Süßstoffzusammensetzung der 10- bis 70fachen, vorzugsweise der 20- bis 70fachen, Süßkraft von Saccharose entspricht.

9. Süßstoffzusammensetzung nach einem der vorangehenden Ansprüche, wobei der physiologische Brennwert der Süßstoffzusammensetzung (Energiegehalt) im Bereich von 2 bis 6 kcal/g, vorzugsweise im Bereich von 2,5 bis 3,6 kcal/g, liegt.

10. Süßstoffzusammensetzung nach einem der vorangehenden Ansprüche, wobei die Süßstoffzusammensetzung als Streusüße oder als Tabletten und/oder Pillen, vorzugsweise als Süßtabletten, vorliegt.

11. Süßstoffzusammensetzung nach einem der vorangehenden Ansprüche, wobei die Süßstoffzusammensetzung eine Gesamtrestfeuchte von 1 bis 5 Gew.-%, insbesondere 2 bis 4 Gew.-%, bezogen auf die Süßstoffzusammensetzung, aufweist.

12. Süßstoffzusammensetzung nach einem der Ansprüche 1 bis 11, wobei die Süßstoffzusammensetzung in Form eines Granulates und/oder Pulvers und/oder in Form von Agglomeraten, insbesondere als Streusüße, vorliegt,
• wobei die Süßstoffzusammensetzung eine Schüttdichte von 20 bis 600 g/l, insbesondere 30 bis 500 g/l, vorzugsweise 40 bis 400 g/l, bevorzugt 50 bis 300 g/l, besonders bevorzugt 60 bis 200 g/l, ganz besonders bevorzugt 70 bis 90 g/l, aufweist und/oder
• wobei die Süßstoffzusammensetzung in Form eines kornförmigen Granulats vorliegt, insbesondere wobei das Granulat eine Partikelgröße von 0,01 bis 6 mm, insbesondere 0,05 bis 4 mm, vorzugsweise 0,075 bis 2 mm, bevorzugt 0,1 bis 1 mm, besonders bevorzugt 0,1 bis 0,5 mm, aufweist und/oder
• wobei die Süßstoffzusammensetzung eine Gesamtrestfeuchte von 0,5 bis 4 Gew.-%, vorzugsweise 2 bis 4 Gew.-%, bezogen auf die Süßstoffzusammensetzung, aufweist und/oder
• wobei die Menge an (a) Ballaststoff 50 bis 95 Gew.-%, insbesondere 70 bis 95 Gew.-%, vorzugsweise 80 bis 95 Gew.-%, besonders bevorzugt 90 bis 95 Gew.-%, bezogen auf die Süßstoffzusammensetzung, beträgt und/oder
• wobei die Menge an (b) Süßstoff 0,5 bis 50 Gew.-%, insbesondere 1 bis 35 Gew.-%, vorzugsweise 2 bis 20 Gew.-%, besonders bevorzugt 3 bis 10 Gew.-%, bezogen auf die Süßstoffzusammensetzung, beträgt und/oder
• wobei als Granulatbildner (a) die Ballaststoffe in Form von Dextrinen und/oder (b) die Süßstoffe und gegebenenfalls (c) Zuckeraustauschstoffe, insbesondere Zuckeralkohole, (d) Zucker und/oder Stärkederivate eingesetzt sind und/oder
• wobei die Granulate und/oder das Pulver und/oder die Agglomerate, insbesondere die Streusüße, durch Sprühtrocknung erhältlich sind bzw. ist.

13. Süßstoffzusammensetzung nach einem der Ansprüche 1 bis 11, wobei die Süßstoffzusammensetzung in Form von Kompaktaten, insbesondere als Tabletten und/oder Pillen, vorzugsweise als Süßtabletten, vorliegt,
• wobei die Form der Kompaktate, insbesondere der Tabletten und/oder Pillen, vorzugsweise der Süßtabletten, in deren durchschnittlich längsten Ausdehnung, insbesondere in deren durchschnittlichen Länge oder in deren durchschnittlichen Durchmesser, ein Maß von 0,5 bis 10 mm, insbesondere 1 bis 8 mm, vorzugsweise 4 bis 6 mm, aufweist und/oder wobei die Form der Kompaktate, insbesondere der Tabletten und/oder Pillen, vorzugsweise der Süßtabletten, in deren durchschnittlich größten Höhe, insbesondere in deren durchschnittlichen Dicke, ein Maß von 0,5 bis 5 mm, insbesondere 1 bis 4 mm, vorzugsweise 1,5 bis 3 mm, bevorzugt 1,8 bis 2,8 mm, aufweist und/oder
• wobei das mittlere Gewicht der einzelnen Kompaktate, jeweils 10 und 200 mg, vorzugsweise 25 und 100 mg, insbesondere 40 und 80 mg, vorzugsweise 45 bis 60 mg, beträgt und/oder
• wobei die Süßstoffzusammensetzung eine Gesamtrestfeuchte von 0,5 bis 4 Gew.-%, vorzugsweise 2 bis 4 Gew.-%, bezogen auf die Süßstoffzusammensetzung, aufweist und/oder wobei die in Form von Kompaktaten, insbesondere Tabletten und/oder Pillen, vorzugsweise Süßtabletten, vorliegende Süßstoffzusammensetzung eine Festigkeit (Tablettenfestigkeit), insbesondere Bruchfestigkeit, von mindestens 5 Newton, insbesondere mindestens 6 Newton, vorzugsweise im Bereich von 5 bis 100 Newton, besonders bevorzugt 5 bis 50 Newton, ganz besonders bevorzugt 6 bis 30 Newton, aufweist, und/oder
• wobei die Menge an (a) Ballaststoff 30 bis 95 Gew.-%, insbesondere 35 bis 95 Gew.-%, vorzugsweise 40 bis 95 Gew.-%, besonders bevorzugt 45 bis 95 Gew.-%, bezogen auf die Süßstoffzusammensetzung, beträgt und/oder
• wobei die Menge an (b) Süßstoff 20 bis 70 Gew.-%, insbesondere 25 bis 70 Gew.-%, vorzugsweise 30 bis 70 Gew.-%, bezogen auf die Süßstoffzusammensetzung, beträgt und/oder
• wobei die Süßstoffzusammensetzung gegebenenfalls außerdem mindestens ein Schmiermittel und/oder Gleitmittel enthält, insbesondere wobei das Schmiermittel und/oder Gleitmittel ausgewählt ist aus Aminosäuren, insbesondere α-Aminosäuren; Polyethern; Fettsäuren und deren Salzen oder Estern; Talkum; aromatischen organischen Säuren oder deren Salzen, insbesondere Benzoesäure oder Benzoaten; sowie deren Mischungen, und bevorzugt eine Aminosäure, insbesondere α-Aminosäure, besonders bevorzugt Leucin, ist und/oder insbesondere wobei die Menge an Schmiermittel und/oder Gleitmittel 0,1 bis 50 Gew.-%, insbesondere 1 bis 30 Gew.-%, vorzugsweise 5 bis 15, besonders bevorzugt 6 bis 12 Gew.-%, bezogen auf die Süßstoffzusammensetzung, beträgt, und/oder
• wobei die Süßstoffzusammensetzung gegebenenfalls außerdem mindestens einen weiteren Inhaltsstoff und/oder mindestens ein weiteres Additiv, insbesondere mindestens ein konsistenzsteuerndes Mittel und/oder mindestens ein Verdickungsmittel, enthält, insbesondere wobei der weitere Inhaltsstoff und/oder das weitere Additiv mindestens ein Polysaccharid oder ein Polysaccharidgemisch ist, vorzugsweise ausgewählt aus α-1,4/α-1,6-glykosidisch verknüpften Polysacchariden und/oder vorzugsweise ausgewählt aus Stärke und Stärkederivaten, insbesondere Maisstärke, Cellulose oder Cellulosederivaten, insbesondere Natriumcarboxymethylcellulose, sowie deren Mischungen, und/oder insbesondere wobei die Menge an weiterem Inhaltsstoff und/oder weiterem Additiv, insbesondere konsistenzsteuerndem Mittel und/oder Verdickungsmittel, 1 bis 30 Gew.-%, insbesondere 5 bis 20 Gew.-%, bevorzugt 10 bis 15 Gew.-%, bezogen auf die Süßstoffzusammensetzung, beträgt, und/oder
• wobei die Süßstoffzusammensetzung gegebenenfalls außerdem mindestens ein Sprengmittel enthält, insbesondere wobei das Sprengmittel ein unter Feuchtigkeitseinfluß gasbildendes Mittel, insbesondere ein Brausezusatz, ist, und/oder insbesondere wobei das Sprengmittel ausgewählt ist aus Alkali- und/oder Erdalkalicarbonaten und/oder -hydrogencarbonaten, insbesondere Natriumhydrogencarbonat, Carbonsäuren, insbesondere Citronensäure, und Hydroxycarbonsäuren, wie Weinsäure, und deren Kombinationen und/oder insbesondere wobei die Menge an Sprengmittel 0,1 bis 20 Gew.-%, insbesondere 1 bis 10 Gew.-%, vorzugsweise 2 bis 5 Gew.-%, bezogen auf die Süßstoffzusammensetzung, beträgt.

14. Verwendung einer Süßstoffzusammensetzung gemäß einem der voranstehenden Ansprüche zum Süßen von Lebensmitteln, insbesondere Getränken oder anderen flüssigen bis pastösen Nahrungsmitteln oder von festen Nahrungsmitteln.

## Claims

1. Sweetener composition, in particular with reduced physiological caloric (energy) content, preferably for sweetening foods, in the form of granulates, powders, or compactates, the sweetener composition containing a combination of
(a) at least one water-soluble bulk material selected from dextrins with 1,2-glycoside bonds, 1,3-glycoside bonds, 1,4-glycoside bonds, and/or 1,6-glycoside bonds, in an amount of 20 - 95 wt % relative to the sweetener composition, the bulk material containing fibres in amounts ranging from 10 - 90 wt % relative to the bulk material; and
(b) at least one sweetener, selected from the group of aspartame, acesulfam, saccharin, cyclamate, stevioside, and scuralose, as well as mixtures thereof, in an amount ranging from 0.01 - 70 wt % relative to the sweetener composition,
whereby the weight ratio of (a) bulk material to (b) sweetener is between 30:1 and 5:1,
whereby the sweetening power by weight of the sweetener composition corresponds to 1 to 70 times the sweetening power of saccharose,
whereby the physiological caloric (energy) content of the sweetener composition ranges from 0.5 to 10 kcal/g, and
whereby the sweetener composition has a total residual moisture of 0.5 to 5 wt % relative to the sweetener composition.

2. Sweetener composition according to claim 1, whereby the amount of (a) bulk material is 30 - 95 wt %, more preferably 40 - 95 wt %, most preferably 50 - 95 wt % relative to the sweetener composition.

3. Sweetener composition according to any of the foregoing claims, whereby (a) the bulk material contains the fibres in amounts ranging from 30 to 70 wt %, in particular 20 to 80 wt %, preferably 30 to 70 wt %, more preferably 40 to 60 wt % relative to (a) the bulk material.

4. Sweetener composition according to any of the foregoing claims, whereby the amount of (b) sweetener is 0,1 - 70 wt %, preferably 1 - 70 wt %, more preferably 5 - 70 wt % relative to the sweetener composition.

5. Sweetener composition according to any of the foregoing claims, whereby the sweetener composition additionally contains (c) at least one sugar exchanger, preferably at least one sugar alcohol, whereby the sugar alcohol is selected from the group of erythritol, mannitol, xylitol, sorbitol, isomaltitol, maltitol, lactitol, galactitol, and mixtures thereof, preferably erythritol, and/or in particular whereby the amount of (c) sugar exchanger is 1 to 50 wt %, in particular 5 to 40 wt %, preferably 10 to 30 wt % relative to the sweetener composition.

6. Sweetener composition according to any of the foregoing claims, whereby the sweetener composition additionally contains (d) at least one sugar, in particular whereby (d) the sugar is selected from mono- or disaccharides, in particular from the group of saccharose, mannose, maltose, dextrose, lactose, glucose, xylose, isomaltulose, trehalose, and mixtures thereof, preferably lactose and/or trehalose, and/or in particular whereby the amount of (d) sugar is 1 to 30 wt %, in particular 3 to 25 wt %, preferably 5 to 20 wt % relative to the sweetener composition.

7. Sweetener composition according to any of the foregoing claims, whereby the sweetener composition additionally comprises (e) additional ingredients and/or excipients, in particular selected from flavours or flavouring agents, acidifiers, colourants, vitamins, minerals, stabilisers and/or preservatives, fillers, compressing agents, exploders, lubricants, consistency adjusters, thickeners, and mixtures thereof.

8. Sweetener composition according to any of the foregoing claims, whereby the sweetening power by weight of the sweetener composition corresponds to 10 to 70 times, preferably 20 to 70 times, the sweetening power of saccharose.

9. Sweetener composition according to any of the foregoing claims, whereby the physiological caloric (energy) content of the sweetener composition ranges from 2 to 6 kcal/g, preferably 2.5 to 3.6 kcal/g.

10. Sweetener composition according to any of the foregoing claims, whereby the sweetener composition exists in the form of sprinkled sweeteners or tablets and/or pills, preferably sweetener tablets.

11. Sweetener composition according to any of the foregoing claims, whereby the sweetener composition has a total residual moisture of 1 to 5 wt %, in particular 2 to 4 wt %, relative to the sweetener composition.

12. Sweetener composition according to any of claims 1 - 11, whereby the sweetener composition exists in the form of a granulate and/or powder and/or in the form of agglomerates, in particular as a sprinkled sweetener,
whereby the sweetener composition has a bulk density of 20 to 600 g/l, in particular 30 to 500 g/I, preferably 40 to 400 g/l, more preferably 50 to 300 g/l, even more preferably 60 to 200 g/I, most preferably 70 to 90 g/I, and/or
whereby the sweetener composition exists in the form of a granular granulate, in particular whereby the granulate has a particle size of 0.01 to 6 mm, in particular 0.05 to 4 mm, preferably 0.075 to 2 mm, more preferably 0.1 to 1 mm, most preferably 0.1 to 0.5 mm, and/or
whereby the sweetener composition has a total residual moisture of 0.5 to 4 wt %, preferably 2 to 4 wt % relative to the sweetener composition, and/or
whereby the amount of (a) bulk material is 50 - 95 wt %, preferably 70 - 95 wt %, more preferably 80 to 95 wt %, most preferably 90 - 95 wt % relative to the sweetener composition, and/or
whereby the amount of (b) sweetener is 0.5 - 50 wt %, preferably 1 - 35 wt %, more preferably 2 to 20 wt %, most preferably 3 - 10 wt % relative to the sweetener composition, and/or
whereby (a) the bulk materials in the form of dextrins and/or (b) the sweeteners, and, if applicable, (c) sugar exchangers, in particular sugar alcohols, (d) sugar, and/or starch derivatives are used as granulating agents, and/or
whereby the granulates and/or the powder and/or the agglomerates, in particular the sprinkled sweetener, is/are obtainable by spray drying.

13. Sweetener composition according to any of claims 1 - 11, whereby the sweetener composition exists in the form of compactates, preferably as tablets and/or pills, more preferably as sweetener tablets.
whereby the shape of the compactates, in particular of the tablets and/or pills, preferably sweetener tablets, at their greatest average extension, in particular their average length or average diameter, have a dimension of 0.5 to 10 mm, in particular 1 to 8 mm, preferably 4 to 6 mm, and/or whereby the shape of the compactates, in particular the tablets and/or pills, preferably sweetener pills, at their greatest average height, preferably their average thickness, have a dimension of 0.5 to 5 mm, preferably 1 to 4 mm, more preferably 1.5 to 3 mm, even more preferably 1.8 to 2.8 mm, and/or
whereby the mean weight of the individual compactates is 10 and 200 mg, preferably 25 and 100 mg, more preferably 40 and 80 mg, even more preferably 45 to 60 mg each, and/or
whereby the sweetener composition has a total residual moisture of 0.5 to 4 wt %, preferably 2 to 4 wt % relative to the sweetener composition, and/or whereby the sweetener composition in the form of compactates, in particular tablets and/or pills, preferably sweetener tablets, has a resistance (tablet resistance), in particular breakage resistance, of at least 5 Newton, preferably at least 6 Newton, more preferably in the range of 5 to 100 Newton, even more preferably 5 to 50 Newton, most preferably 6 to 30 Newton, and/or
whereby the amount of (a) bulk material is 30 - 95 wt %, preferably 35 - 95 wt %, more preferably 40 to 95 wt %, most preferably 45 - 95 wt % relative to the sweetener composition, and/or
whereby the amount of (b) sweetener is 20 - 70 wt %, preferably 25 - 70 wt %, more preferably 30 to 70 wt %, relative to the sweetener composition, and/or
whereby the sweetener composition, if applicable, additionally contains at least one lubricant, in particular whereby the lubricant is selected from amino acids, in particular α-amino acids, polyethers, fatty acids, and salts and esters thereof, talcum, aromatic organic acids or salts thereof, in particular benzoic acid or benzoates, and mixtures thereof, and preferably an amino acid, in particular α-amino acid, more preferably leucin and/or preferably whereby the amount of lubricant is 0.1 to 50 wt %, in particular 1 to 30 wt %, more preferably 5 to 15 wt %, most preferably 6 to 12 wt % relative to the sweetener composition, and/or
whereby the sweetener composition, if applicable, additionally contains at least one additional ingredient and/or additive, in particular at least one consistency adjuster and/or at least one thickener, in particular whereby the additional ingredient and/or additive is selected from α-1,4/α-1,6-glycoside-linked polysaccharides and/or preferably selected from starch and starch derivatives, in particular cornstarch, cellulose or cellulose derivatives, in particular sodium carboxymethylcellulose, and mixtures thereof, and/or in particular whereby the amount of the additional ingredient and/or additive, in particular consistency adjuster and/or thickener, is 1 to 30 wt %, preferably 5 to 20 wt %, more preferably 10 to 15 wt % relative to the sweetener composition, and/or
whereby the sweetener composition, if applicable, additionally contains at least one exploder, in particular whereby the exploder is an agent that forms a gas under the influence of moisture, in particular an effervescent additive, and/or in particular whereby the exploder is selected from alkaline or earth alkali carbonates and/or bicarbonates, in particular sodium bicarbonate, carboxylic acids, in particular citric acid, and hydroxycarboxylic acids such as tartaric acid, and combinations thereof, and/or in particular whereby the amount of exploder 0.1 to 20 wt %, preferably 1 to 10 wt %, more preferably 2 to 5 wt % relative to the sweetener composition.

14. Use of a sweetener composition according to any of the foregoing claims to sweeten foods, in particular drinks or other liquid to pasty foods, or solid foods.

## Revendications

1. Composition édulcorante, ayant en particulier une valeur énergétique physiologique (teneur en énergie) réduite, de préférence pour sucrer des produits alimentaires sous forme de granulés, de poudres ou de produits compactés, la composition édulcorante contenant en combinaison
(a) au moins une substance riche en fibres, soluble dans l'eau, choisie parmi les dextrines ayant des liaisons 1,2-glycosidiques, des liaisons 1,3-glycosidiques, des liaisons 1,4-glycosidiques et/ou des liaisons 1,6-glycosidiques en une quantité de 20 à 95 % en poids par rapport à la composition édulcorante, la substances riche en fibres comportant des fibres en des quantités de 10 à 90 % en poids par rapport à la substance riche en fibres, et
(b) au moins un édulcorant choisi dans le groupe de l'aspartame, de l'acésulfane, de la saccharine, du cyclamate, du stévioside et du sucralose, ainsi que les mélanges des substances mentionnées ci-dessus, en une quantité de 0,01 à 70 % en poids par rapport à la composition édulcorante,
le rapport en poids de (a) la substance riche en fibres à (b) l'édulcorant étant compris entre 30:1 et 5:1,
le pouvoir édulcorant, rapporté au poids, de la substance édulcorante correspondant de 1 à 70 fois le pouvoir édulcorant du saccharose,
la valeur énergétique physiologique de la composition édulcorante (teneur en énergie) étant comprise dans la plage de 0,5 à 10 kcal/g, et
la composition édulcorante présentant une humidité résiduelle totale de 0,5 à 5 % en poids par rapport à la composition édulcorante.

2. Composition édulcorante selon la revendication 1, dans laquelle la quantité de (a), la substance riche en fibres, est de 30 à 95 % en poids, d'une manière particulièrement préférée de 40 à 95 % en poids, d'une manière tout particulièrement préférée de 50 à 95 % en poids, par rapport à la composition édulcorante.

3. Composition édulcorante selon l'une des revendications précédentes, dans laquelle (a), la substance riche en fibres, comprend les fibres en des quantités de 30 à 70 % en poids, en particulier de 20 à 80 % en poids, de préférence de 30 à 70 % en poids, d'une manière particulièrement préférée de 40 à 60 % en poids, par rapport à (a) la substance riche en fibres.

4. Composition édulcorante selon l'une des revendications précédentes, dans laquelle la quantité de (b), l'édulcorant, est de 0,1 à 70 % en poids, de préférence de 1 à 70 % en poids, d'une manière particulièrement préférée de 5 à 70 % en poids, par rapport à la composition édulcorante.

5. Composition édulcorante selon l'une des revendications précédentes, la composition édulcorante comprenant, en plus de (c), au moins un succédané du sucre, de préférence au moins un alcool de sucre, l'alcool de sucre étant en particulier choisi dans le groupe consistant en l'érythritol, le mannitol, le xylitol, le sorbitol, l'isomaltitol, le maltitol, le lactitol, le galactitol et les mélanges de ceux-ci, de préférence l'érythritol, et/ou la quantité de (c), le succédané du sucre, étant en particulier de 1 à 50 % en poids, en particulier de 5 à 40 % en poids, de préférence de 10 à 30 % en poids, par rapport à la composition édulcorante.

6. Composition édulcorante selon l'une des revendications précédentes, la composition édulcorante contenant, en plus de (d), au moins un sucre, en particulier (d), le sucre, étant choisi parmi les mono- ou les disaccharides, en particulier du groupe du saccharose, du mannose, du maltose, du dextrose, du lactose, du glucose, du xylose, de l'isomaltulose, du tréhalose et des mélanges de ceux-ci, de préférence du lactose et/ou du tréhalose, et/ou la quantité de (d), le sucre, étant en particulier de 1 à 30 % en poids, en particulier de 3 à 25 % en poids, de préférence de 5 à 20 % en poids par rapport à la composition édulcorante.

7. Composition édulcorante selon l'une des revendications précédentes, la composition édulcorante comprenant, en plus de (e), d'autres constituants et/ou adjuvants, en particulier choisis parmi les arômes ou les substances aromatiques, les acidifiants, les colorants, les vitamines, les substances minérales, les stabilisants et/ou les conservateurs, les matières de charge, les adjuvants de compression, les désintégrants, les lubrifiants et/ou agents de glissement, les substances régulatrices de consistance, les épaississants et les mélanges de ceux-ci.

8. Composition édulcorante selon l'une des revendications précédentes, dans laquelle le pouvoir édulcorant, rapporté au poids, de la composition édulcorante correspond à 10 à 70 fois, de préférence 20 à 70 fois le pouvoir édulcorant du saccharose.

9. Composition édulcorante selon l'une des revendications précédentes, la valeur énergétique physiologique de la composition édulcorante (teneur en énergie) étant comprise dans la plage de 2 à 6 kcal/g, de préférence dans la plage de 2,5 à 3,6 kcal/g.

10. Composition édulcorante selon l'une des revendications précédentes, la composition édulcorante se présentant sous forme d'un édulcorant à saupoudrer, sous forme de comprimés et/ou de pilules, de préférence sous forme de comprimés édulcorants.

11. Composition édulcorante selon l'une des revendications précédentes, la composition édulcorante présentant une humidité résiduelle totale de 1 à 5 % en poids, en particulier de 2 à 4 % en poids, par rapport à la composition édulcorante.

12. Composition édulcorante selon l'une des revendications 1 à 11, la composition édulcorante se présentant sous forme d'un granulé et/ou d'une poudre et/ou sous forme d'un aggloméré, en particulier sous forme d'un édulcorant à saupoudrer,
- la composition édulcorante présentant une masse volumique apparente de 20 à 600 g/l, en particulier de 30 à 500 g/l, de préférence de 40 à 400 g/l, de préférence de 50 à 300 g/l, d'une manière particulièrement préférée de 60 à 200 g/l, d'une manière tout particulièrement préférée de 70 à 90 g/l, et/ou
- la composition édulcorante se présentant sous forme d'un granulé granulaire, le granulé présentant en particulier une granulométrie de 0,01 à 6 mm, en particulier de 0,05 à 4 mm, de préférence de 0,075 à 2 mm, de préférence de 0,1 à 1 mm, d'une manière particulièrement préférée de 0,1 à 0,5 mm, et/ou
- la composition édulcorante présentant une humidité résiduelle totale de 0,5 à 4 % en poids, de préférence de 2 à 4 % en poids, par rapport à la composition édulcorante, et/ou
- la quantité de (a) la substance riche en fibres, étant de 50 à 95 % en poids, en particulier de 70 à 95 % en poids, de préférence de 80 à 95 % en poids, d'une manière particulièrement préférée de 90 à 95 % en poids, par rapport à la composition édulcorante, et/ou
- la quantité de (b), l'édulcorant, étant de 0,5 à 50 % en poids, en particulier de 1 à 35 % en poids, de préférence de 2 à 20 % en poids, d'une manière particulièrement préférée de 3 à 10 % en poids, par rapport à la composition édulcorante, et/ou
- dans laquelle on utilise en tant que générateur de granulés (a) les substances riches en fibres, sous forme de dextrines, et/ou (b) les édulcorants et éventuellement (c) les succédanés du sucre, en particulier les alcools de sucre, (d) des sucres et/ou des dérivés de l'amidon, et/ou
- les granulés et/ou la poudre et/ou les agglomérés, en particulier les édulcorants à saupoudrer, pouvant être obtenus par séchage par atomisation.

13. Composition édulcorante selon l'une des revendications 1 à 11, la composition édulcorante se présentant sous forme de produits compactés, en particulier de comprimés et/ou de pilules, de préférence sous forme de comprimés édulcorants,
- la forme des produits compactés, en particulier des comprimés et/ou des pilules, de préférence des comprimés édulcorants, dont l'extension en moyenne la plus longue, en particulier dont la longueur moyenne et/ou dont la diamètre moyen présente une mesure de 0,5 à 10 mm, en particulier de 1 à 8 mm, de préférence de 4 à 6 mm, et/ou la forme des produits compactés, en particulier des comprimés et/ou des pilules, de préférence des comprimés édulcorants, dont la hauteur maximale moyenne, en particulier dont l'épaisseur moyenne, présente une mesure de 0,5 à 5 mm, en particulier de 1 à 4 mm, de préférence de 1,5 à 3 mm, de préférence de 1,8 à 2,8 mm, et/ou
- le poids moyen de chacun des produits compactés individuels étant de 10 à 200 mg, de préférence de 25 à 100 mg, en particulier de 40 à 80 mg, de préférence de 45 à 60 mg, et/ou
- la composition édulcorante présentant une humidité résiduelle totale de 0,5 à 4 % en poids, de préférence de 2 à 4 % en poids par rapport à la composition édulcorante, et/ou la composition édulcorante se présentant sous forme de produits compactés, en particulier de comprimés et/ou de pilules, de préférence de comprimés édulcorants, présentant une résistance mécanique (résistance du comprimé), en particulier une résistance à la rupture, d'au moins 5 Newtons, en particulier d'au moins 6 Newtons, de préférence comprise dans la plage de 5 à 100 Newtons, d'une manière particulièrement préférée de 5 à 50 Newtons, d'une manière tout particulièrement préférée de 6 à 30 Newtons, et/ou
- la quantité de (a), la substance riche en fibres, étant de 30 à 95 % en poids, en particulier de 35 à 95 % en poids, de préférence de 40 à 95 % en poids, d'une manière particulièrement préférée de 45 à 95 % en poids, par rapport à la composition édulcorante, et/ou
- la quantité de (b), l'édulcorant, étant de 20 à 70 % en poids, en particulier de 25 à 70 % en poids, de préférence de 30 à 70 % en poids, par rapport à la composition édulcorante, et/ou
- la composition édulcorante contenant éventuellement en outre au moins un lubrifiant et/ou un agent de glissement, en particulier le lubrifiant et/ou l'agent de glissement étant choisi parmi les acides aminés, en particulier les acides - aminés ; les polyéthers ; les acides gras et leurs sels ou esters ; le talc ; les acides organiques aromatiques et leurs sels, en particulier l'acide benzoïque ou les benzoates ; ainsi que les mélanges de ceux-ci, et étant de préférence chacun un acide aminé, en particulier un acide -aminé, d'une manière particulièrement préférée la leucine, et/ou en particulier la quantité du lubrifiant et/ou de l'agent de glissement étant de 0,1 à 50 % en poids, en particulier de 1 à 30 % en poids, de préférence de 5 à 15, d'une manière particulièrement préférée de 6 à 12 % en poids, par rapport à la composition édulcorante, et/ou
- la composition édulcorante contenant éventuellement en outre au moins un constituant supplémentaire et/ou un additif supplémentaire, en particulier au moins un agent régulateur de consistance et/ou un épaississant, le constituant supplémentaire et/ou l'additif supplémentaire étant chacun au moins un polysaccharide ou un mélange de polysaccharides, choisi de préférence parmi les polysaccharides à liaison α-1,4/α-1,6-glycosidique et/ou de préférence étant choisi parmi l'amidon et les dérivés de l'amidon, en particulier l'amidon de maïs, la cellulose ou les dérivés de la cellulose, en particulier la carboxyméthylcellulose sodique, ainsi que les mélanges de ceux-ci, et/ou en particulier la quantité du constituant supplémentaire et/ou de l'additif supplémentaire, en particulier de l'agent régulateur de consistance et/ou de l'épaississant, étant de 1 à 30 % en poids, en particulier de 5 à 20 % en poids, de préférence de 10 à 15 % en poids, par rapport à la composition édulcorante, et/ou
- la composition édulcorante contenant éventuellement en outre au moins un désintégrant, le désintégrant étant en particulier un agent générateur de gaz sous l'influence de l'humidité, en particulier un additif d'effervescence, et/ou en particulier le désintégrant étant choisi parmi les carbonates et/ou les hydrogénocarbonates de métaux alcalins et/ou alcalino-terreux, en particulier l'hydrogénocarbonate de sodium, les acides carboxyliques, en particulier l'acide citrique et les acides hydroxycarboxyliques tels que l'acide tartrique, et les combinaisons de ceux-ci, et/ou en particulier la quantité du désintégrant étant de 0,1 à 20 % en poids, en particulier de 1 à 10 % en poids, de préférence de 2 à 5 % en poids, par rapport à la composition édulcorante.

14. Utilisation d'une composition édulcorante selon l'une des revendications précédentes pour sucrer des produits alimentaires, en particulier des boissons et/ou d'autres aliments liquides à pâteux, en particulier d'aliments solides.
